(19) Europäisches Patentamt
European Patent Office
Office européen des brevets

(11) **EP 2 961 054 B1**

(12) **EUROPÄISCHE PATENTSCHRIFT**

(45) Veröffentlichungstag und Bekanntmachung des Hinweises auf die Patenterteilung:
**11.04.2018 Patentblatt 2018/15**

(51) Int Cl.:
*H02M 3/335* *(2006.01)*     *H02M 3/337* *(2006.01)*
*H02M 3/139* *(2006.01)*

(21) Anmeldenummer: **14173853.4**

(22) Anmeldetag: **25.06.2014**

(54) **Regelung eines Resonanzwandlers**

Control of a resonance converter

Réglage d'un convertisseur de courant à résonance

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.12.2015 Patentblatt 2015/53**

(73) Patentinhaber: **Siemens Aktiengesellschaft**
**80333 München (DE)**

(72) Erfinder:
• **Dyszewski, Janusz**
  **1200 Wien (AT)**
• **Reschenauer, Stefan**
  **2191 Atzelsdorf (AT)**

(74) Vertreter: **Maier, Daniel Oliver et al**
**Siemens AG**
**Postfach 22 16 34**
**80506 München (DE)**

(56) Entgegenhaltungen:
**DE-A1- 10 012 362**     **RU-C1- 2 363 989**
**US-A- 5 375 031**

• **FENG, W. ; CENTER FOR POWER ELECTRONICS SYSTEMS , VIRGINIA TECH, BLACKSBURG, USA ; MATTAVELLI, P. ; LEE, F. C.: "Pulsewidth Locked Loop (PWLL) for Automatic Resonant Frequency Tracking in LLC DC-DC Transformer (LLC -DCX)", IEEE TRANSACTIONS ON POWER ELECTRONICS, Bd. 28, Nr. 4, April 2013 (2013-04), Seiten 1862-1869, XP002731685, ISSN: 0885-8993, DOI: 10.1109/TPEL.2012.2210912**

EP 2 961 054 B1

**Beschreibung**

GEBIET DER ERFINDUNG

Die vorliegende Erfindung betrifft ein Verfahren zur Regelung eines Resonanzwandlers, der sekundärseitig über eine galvanische Trennung, insbesondere über einen Transformator, mit einem selbstgeführten Synchrongleichrichter verbunden ist, wobei der Resonanzwandler zumindest zwei Transistoren aufweist, denen jeweils eine Schaltfrequenz vorgegeben wird. Darüber hinaus offenbart die vorliegende Anmeldung eine Schaltung zur Regelung eines zumindest zwei Transistoren aufweisenden Resonanzwandlers, umfassend eine galvanische Trennung, insbesondere einen Transformator, und einen sekundärseitig angeordneten selbstgeführten Synchrongleichrichter mit Transistoren. Grundsätzlich könnten statt Transistoren auch andere elektronische Schalter verwendet werden.

Üblicherweise werden Resonanzwandler (im Englischen auch als "resonant converter" bezeichnet) in der elektrischen Energietechnik bzw. zur Energieübertragung verwendet und stellen eine spezielle schaltungstechnische Form eines Gleichspannungswandlers dar, welcher zur Energieübertragung mit einem Schwingkreis arbeitet, wobei ein Resonanzwandler im Gegensatz zu Umformern ohne mechanisch bewegte Teile arbeitet. Dabei wandelt der Resonanzwandler eine Gleichspannung in eine ein- oder mehrphasige Wechselspannung um, wobei er für einen optimalen Betrieb typischerweise mit annähernd konstanter Last betrieben wird. Üblicherweise sorgt ein Resonanzkreis dafür, dass die Transistoren, beispielsweise Bipolar-Transistoren, MOS-FETs u.dgl., eines Resonanzwandlers im Strom- oder Spannungsnulldurchgang ausgeschaltet werden, wobei man zwischen ZVS (Zero Voltage Switching) Resonanzwandlern und ZCS (Zero Current Switching) Resonanzwandlern, das heißt Resonanzwandler, die im Spannungsnulldurchgang oder im Stromnulldurchgang schalten, unterscheidet, wobei meist beides zusammenfällt. Erfolgt keine Gleichrichtung am Ausgang, so bezeichnet man den Resonanzwandler auch als Wechselrichter (im Englischen auch als "inverter" bezeichnet).

STAND DER TECHNIK

Der Resonanzkreis eines Resonanzwandlers ist im Schaltungsaufbau entweder primär- oder sekundärseitig angeordnet, davon abhängig wird der Wandler im Strom- oder im Spannungsnulldurchgang geschaltet. Dies hängt jedoch davon ab, ob ein Serien- oder ein Parallelresonanzkreis eingesetzt wird, wobei die energieübertragende Strecke im Bereich ihres Resonanzpunktes betrieben wird. Die leistungsübertragende Strecke mit dem Transformator bildet einen Schwingkreis mit zusätzlichen Kapazitäten und Induktivitäten, durch welche der Bereich der Schaltfrequenz mitbestimmt wird und so die Verlustleistung während der Schaltvorgänge minimiert wird.

Die Resonanzwandler können abhängig von der Anwendung als LLC-(=LCL) oder LCC-Konverter ausgebildet sein, wobei der LCL-Konverter eine geringe Verlustleistung und einen guten Wirkungsgrad gewährleistet. Üblicherweise wird für das Aufladen ein LCC-Resonanzwandler und für das Rückspeisen ein LLC-Resonanzwandler eingesetzt, zwischen denen mit Hilfe eines Schaltelements umgeschaltet wird. Hierbei kann durch den integrierten Resonanzwandler ein nahezu sinusförmiger Strom erzeugt werden, wobei eine induktive Blindleistung zum Erreichen des Nullspannungsschaltens bereitgestellt wird, wodurch starke Verluste vermieden werden und der Wirkungsgrad hoch gehalten wird.

Zur Regelung der Ausgangsspannung werden Resonanzwandler üblicherweise mit festem Tastverhältnis und variabler Frequenz angesteuert.

Anwendung finden solche Resonanzwandler beispielsweise als elektronische Vorschaltgeräte bei Leuchtstofflampen, um eine für den Betrieb der Leuchtstofflampe notwendige hohe Spannung zu erzeugen. Des Weiteren dienen Wechselrichter häufig zur Stromversorgung von Leuchtröhren, wie sie beispielsweise zur Hintergrundbeleuchtung von TFT-Flachbildschirmen verwendet werden.

Die Regelung des Resonanzwandlers kann mit Hilfe eines Steuersignals des selbstgeführten Synchrongleichrichters erfolgen. Dabei erfolgt gemäß der Veröffentlichung "LLC Converters with Automatic Resonant Frequency Tracking Based on Synchronous Rectifier (SR) Gate Driving Signals", Weiyi Feng; Mattavelli, P.; Lee, F.C.; Dianbo Fu; Applied Power Electronics Conference and Exposition (APEC), 2011 Twenty-Sixth Annual IEEE, ein Vergleich der Einschaltperioden der Schalttransistoren auf der Primärseite mit den Einschaltperioden der Schalttransistoren des Synchrongleichrichters auf der Sekundärseite. Die Einschaltperioden werden digital gemessen, verglichen und die Einschaltzeitdifferenz berechnet. Gleiche Einschaltzeiten bedeuten Resonanzbetrieb.

Auch wenn bei dieser Lösung nur eine Halbwelle auf der Primär- und Sekundärseite gemessen werden muss, ist doch an dieser Lösung die aufwändige Ansteuerung mittels eines schnellen Signalprozessors von Nachteil. Diese Schaltung ist nicht eigensicher, der Betrieb ist gänzlich vom Signalprozessor abhängig. In der IEEE-Veröffentlichung "Pulsewidth Locked Loop (PWLL) for Automatic Resonant Frequency Tracking in LLC DC-DC Transformer (LLC -DCX)" (April 2013) erfolgt die Nachregelung der Schaltfrequenzen der Leistungstransistoren des Resonanzwandlers mit Hilfe einer Phasenregelschleife, genannt Pulsewidth Locked Loop, welche in digitaler Weise die Differenz $T_2$-$T_1$ der zeitlichen Pulsbreiten der Ansteuersignale für die Leistungstransistoren des Resonanzwandlers, $T_1$, und die Leistungstransistoren

des Synchrongleichrichters, $T_2$, berücksichtigt. Aus der Druckschrift US5375031 ist weiterhin bekannt, ein PWM-Signal über ein RC-Tiefpassfilter und einen Operationsverstärker in ein analoges Signal umzuwandeln.

DARSTELLUNG DER ERFINDUNG

Es ist daher eine Aufgabe der Erfindung, ein Verfahren und eine zugehörige Schaltung für einen Resonanzwandler zu schaffen, durch welche der Resonanzbetrieb ohne aufwändigen Signalprozessor sichergestellt werden kann.

Dabei arbeitet ein LLC-Resonanzwandler in Resonanz, d.h. dass die Eingangsspannung gleich der Ausgangsspannung ist, wenn eine Resonanzfrequenz

$$f_0 = \frac{1}{2\pi \sqrt{L_r C_r}}$$

(1)

gleich einer Schaltfrequenz $f_s$ ist.

Die Aufgabe wird durch ein Verfahren nach Anspruch 1 gelöst, indem zumindest ein Ansteuersignal der Transistoren des Resonanzwandlers und zumindest ein Ansteuersignal von Transistoren des selbstgeführten Synchrongleichrichters mit zumindest einem diskreten Tiefpassfilter geglättet und miteinander mittels Differenzbildung verglichen werden, wobei eine Nachregelung der Schaltfrequenzen der Transistoren des Resonanzwandlers basierend auf einer ermittelten Differenz derart erfolgt, dass die Differenz gleich Null wird.

Es werden in der Regel jeweils vom primären und sekundären Rechteck-Steuersignal mittels diskreter Tiefpassfilter (also analoger Tiefpassfilter auf Basis passiver und/oder aktiver Bauteile anstatt digitaler Filter) Steuerspannungen erzeugt.

Die Einschaltdauer dieser Steuersignale ist direkt von den jeweiligen Totzeiten primär- und sekundärseitig abhängig. Folglich bedeutet eine höhere Gleichspannung nach dem Tiefpassfilter eine geringere Totzeit. Diese beiden Gleichspannungen werden in der Regel mittels eines gewöhnlichen Differenzverstärkers subtrahiert und die dabei entstandene Differenzspannung wird dem spannungsgesteuerten Oszillator (VCO) des Steuer-ICs für die Transistoren des Resonanzwandlers zugeführt, worüber die Betriebsfrequenz des Wandlers nachgeregelt wird. Sobald Resonanzbetrieb erreicht wird, beträgt die Differenz der beiden Gleichspannungen null.

Die Verwendung der diskreten Tiefpassfilter und des Differenzverstärkers hat den Vorteil einer sicheren, zuverlässigen und stabilen Signalübertragung. Es können aktiv Bauteiltoleranzen und Umgebungsvariablen, wie beispielsweise die Betriebstemperatur, kompensiert werden. Diese Schaltungsrealisierung erreicht folglich auch unter realen, nicht idealen Bedingungen den idealen Resonanzarbeitspunkt.

Es kann vorgesehen sein, dass bei der Nachregelung der Schaltfrequenzen die Totzeiten der Transistoren des Resonanzwandlers unverändert bleiben und nur die Einschaltzeiten verändert werden. Die Totzeiten der primären Leistungsstufe sind in der Regel fest von einem Steuer-IC vorgegeben, um Zero Voltage Switching zu realisieren, die Einschaltzeiten werden dagegen verändert, um Resonanzbetrieb zu erreichen.

Vorteilhafter Weise kann vorgesehen sein, dass die Totzeiten der Transistoren des selbstgeführten Synchrongleichrichters mit den Totzeiten der Transistoren des Resonanzwandlers synchronisiert werden. Die Totzeiten der Synchrongleichrichter werden also nachgestellt, um auf der sekundären Seite die gleichen Totzeiten wie auf der Primärseite zu erzielen. Dies ist notwendig, um den größtmöglichen Wirkungsgrad zu realisieren.

Darüber hinaus umfasst die vorliegende Erfindung eine Schaltung nach Anspruch 4 zur Regelung eines zumindest zwei Transistoren aufweisenden Resonanzwandlers, umfassend eine galvanische Trennung, insbesondere einen Transformator, und einen sekundärseitig angeordneten selbstgeführten Synchrongleichrichter mit Transistoren.

Dabei sind Verbindungen vorgesehen, mit welchem zumindest ein Ansteuersignal der Transistoren des Resonanzwandlers und zumindest ein Ansteuersignal von Transistoren des selbstgeführten Synchrongleichrichters einem diskreten Tiefpassfilter zugeführt werden können, sodass die Ansteuersignale der Transistoren mit dem Tiefpassfilter geglättet werden können, dass ein dem Tiefpassfilter nachgeschalteter Differenzbildner vorgesehen ist, mit welchem die Ansteuersignale miteinander mittels Differenzbildung verglichen werden können, und dass eine Regeleinheit vorgesehen ist, mit welcher eine Nachregelung der Schaltfrequenzen der Transistoren des Resonanzwandlers basierend auf der ermittelten Differenz derart erfolgen kann, dass die Differenz gleich Null wird.

Der Differenzbildner wird in der Regel durch einen Differentialverstärker gebildet. Die Regeleinheit enthält vorzugsweise einen spannungsgesteuerten Oszillator, der mit seiner Schwingfrequenz die Schaltfrequenzen der Transistoren des Resonanzwandlers vorgibt.

Dabei weist der Resonanzwandler vorzugsweise einen LLC-Konverter auf. Mit einem LLC-Konverter werden ein besonders guten Wirkungsgrad, eine gute Kurzschlussfestigkeit, Leerlaufsicherheit sowie besonders günstige EMV-Eigenschaften erreicht. In Abhängigkeit von dem jeweiligen Anwendungsgebiet bzw. den jeweiligen Anforderungen wäre grundsätzlich auch ein LCC-Konverter in gleicher Weise einsetzbar.

Für die Verwendung der erfindungsgemäßen Schaltung im Leistungsbereich ist es von Vorteil, wenn die Transistoren als MOS-FET ausgebildet sind. Einsetzbar sind auch bipolare Transistoren oder IGBT.

Der Resonanzwandler kann vorzugsweise in Form einer Vollbrücke oder einer Halbbrücke ausgebildet sein. Die Ausführung als Halbbrücke umfasst zwei Schalttransistoren und in der Regel einen Doppeltreiber, die Transistoren schalten abwechselnd mit einer kurzen Pause (Totzeit). Bei einer Doppelbrücke kommen vier Schalttransistoren und in der Regel ein Vierfachtreiber zum Einsatz. Es werden immer zwei Schalttransistoren gleichzeitig eingeschaltet (z.B. immer die diagonal gegenüberliegenden), darauf folgt eine Totzeit, dann werden die beiden anderen Schalttransistoren eingeschaltet. Während die Halbbrücke einfacher aufgebaut und kostengünstiger ist, hat eine Vollbrücke den Vorteil der geringeren Strombelastung der Schaltelemente im Vergleich zur Halbbrücke, dies bringt zwar geringere Verluste, aber im Regelfall überwiegen die Vorteile einer Vollbrücke erst bei hohen Leistungen von deutlich >1kW.

KURZE BESCHREIBUNG DER FIGUREN

Zur weiteren Erläuterung der Erfindung wird im nachfolgenden Teil der Beschreibung auf die Figuren Bezug genommen, aus denen weitere vorteilhafte Ausgestaltungen, Einzelheiten und Weiterbildungen der Erfindung zu entnehmen sind. Dabei zeigt:

Fig. 1 eine schematische Darstellung des prinzipiellen erfindungsgemäßen Schaltungsaufbaues eines Resonanzwandlers, welcher mit einem selbstgeführten Synchrongleichrichter verbunden ist,

Fig. 2 die Ansteuersignale bei Unterresonanz des Resonanzwandlers,

Fig. 3 die Ansteuersignale bei Resonanz des Resonanzwandlers.

WEGE ZUR AUSFÜHRUNG DER ERFINDUNG

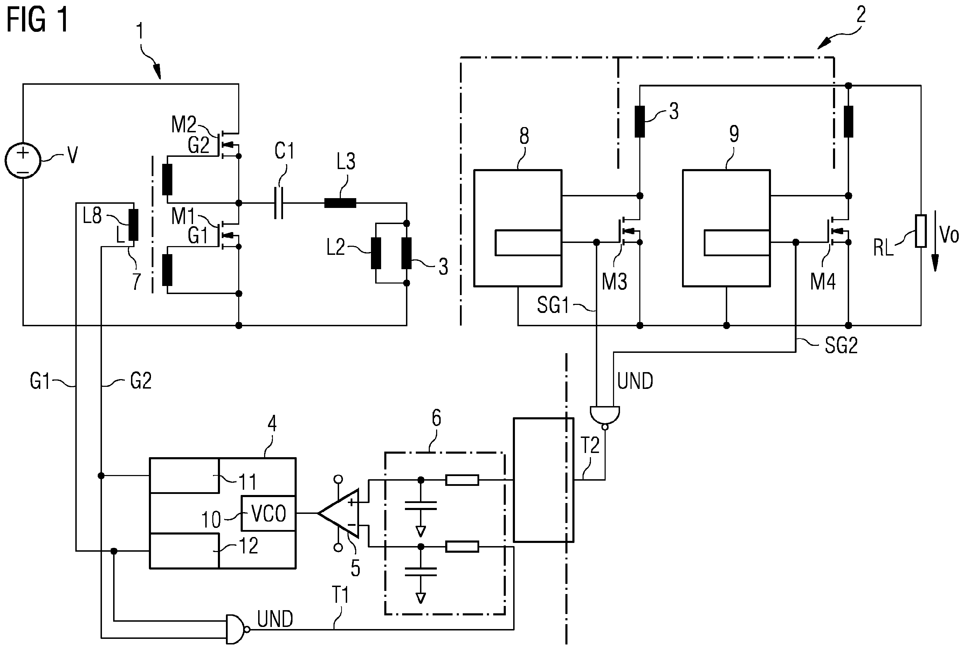

In Fig. 1 ist ein LLC-Resonanzwandler 1 dargestellt, welcher auf der Sekundärseite mit einem selbstgeführten Synchrongleichrichter 2 verbunden ist, nämlich über einen Transformator 3. Die Primärwicklung des Transformators 3 ist beim Resonanzwandler 1 dargestellt, die Sekundärwicklung beim Synchrongleichrichter 2. An den Resonanzwandler 1 wird eine Eingangsspannung V angelegt, am Lastwiderstand RL am Ausgang des Synchrongleichrichters 2 liegt eine Ausgangsspannung Vo an.

Der Resonanzkreis des Resonanzwandlers 1 besteht aus der Resonanzkapazität C1 und der Resonanzinduktivität L3 sowie der Induktivität L2. Den Transistoren M1, M2 des Resonanzwandlers 1 wird jeweils von der Regeleinheit 4 eine Schaltfrequenz vorgegeben, in Form von Ansteuersignalen G1, G2, die dem Ansteuerübertrager 7 zugeführt werden. Diese Ansteuersignale G1, G2 werden andererseits auch zu einem Ansteuersignal T1 überlagert und dem Tiefpassfilter 6 zugeführt. Der Resonanzwandlers 1, also der Leistungsteil der Schaltung, ist hier als Halbbrücke ausgebildet.

Der Synchrongleichrichter 2 verfügt hier über zwei Transistoren M3, M4, welche jeweils über eine eigene Steuereinheit 8, 9 angesteuert werden, und zwar mit einem Steuersignal SG1 bzw. einem Steuersignal SG2. Diese Steuersignale SG1, SG2 werden auch zu einem Ansteuersignal T2 überlagert und ebenfalls dem Tiefpassfilter 6 zugeführt.

Der Tiefpassfilter 6 weist für jedes Ansteuersignal T1, T2 ein einfaches RC-Glied auf, z.B. mit einer Zeitkonstante von einigen hunderten ms bei Schaltperioden der Transistoren von von etwa $10\,\mu$s. Dies bedeutet, dass das erfindungsgemäße Tracking verglichen mit dem eigentlichen Schaltvorgang sehr langsam abläuft. Das vom Tiefpassfilter 6 gelieferte Signal ist vor allem ein Kompensationssignal, um etwaige Abweichungen durch Erwärmung oder Bauteiletoleranzen zu kompensieren.

Die vom Tiefpassfilter 6 geglätteten Signale T1, T2 werden im Differenzverstärker 5 voneinander subtrahiert und die dabei entstandene Differenzspannung wird dem spannungsgesteuerten Oszillator (VCO) 10 der Regeleinheit 4, also z.B. eines Steuer-ICs, umfassend Treiber 11, 12 für die beiden Transistoren M1, M2, zugeführt. Der spannungsgesteuerte Oszillator 10 gibt mit seiner Schwingfrequenz die Schaltfrequenzen der Transistoren M1, M2 des Resonanzwandlers 1 vor. Der spannungsgesteuerte Oszillator 10 kann z.B. als RC-Oszillator ausgeführt sein, wobei die Frequenz des Ausgangssignals des spannungsgesteuerten Oszillators 10 die doppelte Schaltfrequenz des Resonanzwandlers 1 aufweist. Die Schaltfrequenz wird mit Hilfe einer Änderung der Eingangsspannung des spannungsgesteuerten Oszillators 10 geändert.

Die Einschaltdauer der Steuersignale G1, G2 ist direkt von den Totzeiten abhängig. Folglich bedeutet eine höhere Gleichspannung nach dem Tiefpassfilter 6 eine geringere Totzeit. Die nach dem Differentialverstärker 5 entstandene Differenzspannung wird dem spannungsgesteuerten Oszillator 10 des Resonanzwandlers 1 zugeführt, worüber die Betriebsfrequenz des Resonanzwandlers 1 mittels der Ansteuersignale G1, G2 nachgeregelt wird. Sobald Resonanzbetrieb erreicht wird, beträgt die Differenz der beiden Gleichspannungen null. Bei der Nachregelung der Schaltfrequenzen bleiben die Totzeiten der Transistoren M1, M2 des Resonanzwandlers 1 unverändert und nur die Einschaltzeiten werden verändert.

Um einen hohen Wirkungsgrad zu erreichen, werden die Totzeiten der Transistoren M3, M4 des selbstgeführten Synchrongleichrichters 2 mit den Totzeiten der Transistoren M1, M2 des Resonanzwandlers) synchronisiert.

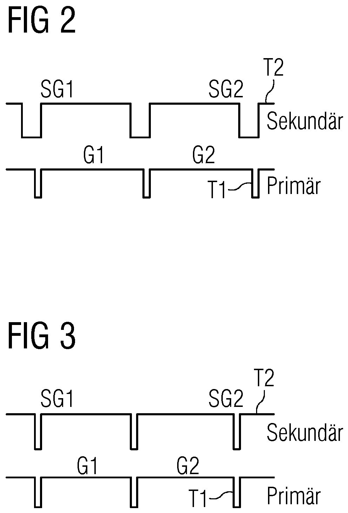

Dies ist in den Fig. 2 und 3 dargestellt: in Fig. 2 ist der zeitliche Verlauf der Ansteuersignale T1 und T2, welche die Form von Rechtecksignalen aufweisen, bei Unterresonanz des Resonanzwandlers 1 dargestellt. Dabei sind die Totzeiten von T2 länger als jene von T1. Die Totzeiten der Transistoren M3, M4 werden nun durch Veränderung der Signale SG1 und SG2 so nachgestellt, dass sie mit denen der Transistoren M1, M2, zusammenfallen.

Dies ist nun in Fig. 3 der Fall, T1 und T2 weisen die gleichen Totzeiten auf.

Beim Umschalten der Polarität des Transformators 3 wird während des Abschaltens des einen Transistors M1 und dem Einschalten des anderen Transistors M2 (bzw. nach dem Abschalten des einen Transistors M1 und vor dem Einschalten des anderen Transistors M2)) also eine definierte Zeit eingehalten, in der kein Transistor des Resonanzwandlers 1 eingeschaltet ist. Während dieser Zeit (Totzeit) lädt die Resonanzinduktivität die parasitären Kapazitäten der Transistoren M1, M2 so um, dass der einzuschaltende Transistor ohne Spannung einschalten kann (Zero Voltage Switching). Auch der selbstgeführte Synchrongleichrichter 2 hat eine solche "Lücke" beim Wechsel der Polarität des Transformators 3. Werden nun erfindungsgemäß die Ansteuersignale der Transistoren M1, M2 des Resonanzwandlers 1 einerseits und der Transistoren M3, M4 des Synchrongleichrichters 2 andererseits geglättet und miteinander verglichen, kann man den Resonanzwandler 1 auf seine Resonanzfrequenz regeln.

Für eine Anwendung im Leistungsbereich 500W bei 400-800V Gleichspannung sind MOS-FETs derzeit die gängigste wie auch gleichzeitig die beste Wahl für die Transistoren M1, M2, M3, M4. Für höhere Leistung im Bereich >>1kW sind auch IGBTs verwendbar, wobei hierbei eine Reduzierung der Schaltfrequenz notwendig wird. Bei Eingangsspannungen bis etwa 1000V bestehen keinerlei Gründe, andere Bauelemente als N-Kanal MOS-FETs zu verwenden. Sollte die Eingangsspannung höher als 1000V sein, ist es notwendig, IGBTs in Betracht zu ziehen. Bipolare Transistoren sind für eine Anwendung im Leistungsbereich tendenziell zu langsam, verursachen höhere Verluste beim Schalten und benötigen bei diesen Spannungen hohen Steuerstrom durch die bauteilbedingte geringe Stromverstärkung.

Bezugszeichenliste:

| 1 | Resonanzwandler |
|---|---|
| 2 | selbstgeführter Synchrongleichrichter |
| 3 | Transformator |
| 4 | Regeleinheit des Resonanzwandlers 1 |
| 5 | Differenzbildner (Differentialverstärker) |
| 6 | Tiefpassfilter |
| 7 | Ansteuerüberträger |
| 8 | Steuereinheit |
| 9 | Steuereinheit |
| 10 | spannungsgesteuerten Oszillator (VCO) |
| 11 | Treiber |
| 12 | Treiber |
| C1 | Resonanzkapazität |
| G1 | Ansteuersignal |
| G2 | Ansteuersignal |
| L2 | Induktivität |
| L3 | Resonanzinduktivität |
| M1 | erster Transistor des Resonanzwandlers 1, in Form eines MOS-FETs |
| M2 | zweiter Transistor des Resonanzwandlers 1, in Form eines MOS-FETs |
| RL | Lastwiderstand |
| M3 | erster Transistor des Synchrongleichrichters 2, in Form eines MOS-FETs |
| M4 | zweiter Transistor des Synchrongleichrichters 2, in Form eines MOS-FETs |
| SG1 | Steuersignal |
| SG2 | Steuersignal |
| T1 | Ansteuersignal |
| T2 | Ansteuersignal |
| V | Eingangsspannung |
| Vo | Ausgangsspannung |

**EP 2 961 054 B1**

## Patentansprüche

1. Verfahren zur Regelung eines Resonanzwandlers (1), der sekundärseitig über eine galvanische Trennung, insbesondere über einen Transformator (3), mit einem selbstgeführten Synchrongleichrichter (2) verbunden ist, wobei der Resonanzwandler (1) zumindest zwei Transistoren (M1, M2) aufweist, denen jeweils eine Schaltfrequenz vorgegeben wird, **dadurch gekennzeichnet, dass** zumindest ein Ansteuersignal (T1) der Transistoren (M1, M2) des Resonanzwandlers (1) und zumindest ein Ansteuersignal (T2) von Transistoren (M3, M4) des selbstgeführten Synchrongleichrichters (2) mit zumindest einem diskreten Tiefpassfilter (6) geglättet und die geglätteten Ansteuersignale (T1, T2) miteinander mittels Differenzbildung durch einen Differenzbildner, insbesondere einem Differenzverstärker, verglichen werden, wobei eine Nachregelung der Schaltfrequenzen der Transistoren (M1, M2) des Resonanzwandlers (1) basierend auf einer ermittelten Differenz derart erfolgt, dass die Differenz gleich Null wird.

2. Verfahren zur Regelung eines Resonanzwandlers (1) nach Anspruch 1, **dadurch gekennzeichnet, dass** bei der Nachregelung der Schaltfrequenzen die Totzeiten der Transistoren (M1, M2) des Resonanzwandlers (1) unverändert bleiben und nur die Einschaltzeiten verändert werden.

3. Verfahren zur Regelung eines Resonanzwandlers (1) nach einem der Ansprüche 1 bis 2, **dadurch gekennzeichnet, dass** die Totzeiten der Transistoren (M3, M4) des selbstgeführten Synchrongleichrichters (2) mit den Totzeiten der Transistoren (M1, M2) des Resonanzwandlers (1) synchronisiert werden.

4. Schaltung zur Regelung eines zumindest zwei Transistoren (M1, M2) aufweisenden Resonanzwandlers (1), umfassend eine galvanische Trennung, insbesondere einen Transformator (3), und einen sekundärseitig angeordneten selbstgeführten Synchrongleichrichter (2) mit Transistoren (M3, M4), zur Durchführung des Verfahrens nach einem der Ansprüche 1 bis 3, **dadurch gekennzeichnet, dass** Verbindungen vorgesehen sind, mit welchem zumindest ein Ansteuersignal (T1) der Transistoren (M1, M2) des Resonanzwandlers (1) und zumindest ein Ansteuersignal (T2) von Transistoren (M3, M4) des selbstgeführten Synchrongleichrichters (2) einem diskreten Tiefpassfilter (6) zugeführt werden können, sodass die Ansteuersignale (T1, T2) der Transistoren mit dem Tiefpassfilter (6) geglättet werden können, dass ein dem Tiefpassfilter (6) nachgeschalteter Differenzbildner (5) vorgesehen ist, mit welchem die geglätteten Ansteuersignale (T1, T2) miteinander mittels Differenzbildung verglichen werden können, und dass eine Regeleinheit (4) vorgesehen ist, mit welcher eine Nachregelung der Schaltfrequenzen der Transistoren (M1, M2) des Resonanzwandlers (1) basierend auf der ermittelten Differenz derart erfolgen kann, dass die Differenz gleich Null wird.

5. Schaltung nach Anspruch 4, **dadurch gekennzeichnet, dass** die Regeleinheit (4) einen spannungsgesteuerten Oszillator (10) enthält.

6. Schaltung nach Anspruch 4 oder 5, **dadurch gekennzeichnet, dass** der Resonanzwandler (1) einen LLC-Konverter (C1, L2, L3) umfasst.

7. Schaltung nach einem der Ansprüche 4 bis 6, **dadurch gekennzeichnet, dass** die Transistoren (M1, M2, M3, M4) als MOS-FET oder als bipolare Transistoren oder als IGBT ausgebildet sind.

8. Schaltung nach einem der Ansprüche 4 bis 7, **dadurch gekennzeichnet, dass** der Resonanzwandler (1) in Form einer Vollbrücke oder einer Halbbrücke ausgebildet ist.

## Claims

1. Method for controlling a resonance converter (1) which is connected on the secondary side via a galvanic isolation, in particular via a transformer (3), to a self-commutated synchronous rectifier (2), wherein the resonance converter (1) has at least two transistors (M1, M2), for each of which a switching frequency is predetermined, **characterised in that** at least one control signal (T1) of the transistors (M1, M2) of the resonance converter (1) and at least one control signal (T2) of transistors (M3, M4) of the self-commutated synchronous rectifier (2) are smoothed with at least one discrete low-pass filter (6) and the smoothed control signals (T1, T2) are compared with each other by means of difference formation using a difference former, in particular a difference amplifier, wherein an adjustment of the switching frequencies of the transistors (M1, M2) of the resonance converter (1) is performed based on a determined difference, such that the difference is equal to zero.

2. Method for controlling a resonance converter (1) according to claim 1, **characterised in that** the dead times of the transistors (M1, M2) of the resonance converter (1) remain unchanged during the adjustment of the switching frequencies and only the switch-on times are changed.

3. Method for controlling a resonance converter (1) according to one of claims 1 to 2, **characterised in that** the dead times of the transistors (M3, M4) of the self-commutated synchronous rectifier (2) are synchronised with the dead times of the transistors (M1, M2) of the resonance converter (1) .

4. Circuit for controlling a resonance converter (1) having at least two transistors (M1, M2), comprising a galvanic isolation, in particular a transformer (3), and a secondary-side self-commutated synchronous rectifier (2) having transistors (M3, M4), for carrying out the method according to one of claims 1 to 3, **characterised in that** connections are provided, with which at least one control signal (T1) of the transistors (M1, M2) of the resonance converter (1) and at least one control signal (T2) of transistors (M3, M4) of the self-commutated synchronous rectifier (2) can be supplied to a discrete low-pass filter (6), such that the control signals (T1, T2) of the transistors can be smoothed with the low-pass filter (6), that a difference former (5) is provided downstream of the low-pass filter (6), with which the smoothed control signals (T1, T2) can be compared with each other by means of difference formation, and that a control unit (4) is provided with which an adjustment of the switching frequencies of the transistors (M1, M2) of the resonance converter (1) can be performed based on a determined difference, such that the difference is equal to zero.

5. Circuit according to claim 4, **characterised in that** the control unit (4) includes a voltage-controlled oscillator (10) .

6. Circuit according to claim 4 or 5, **characterised in that** the resonance converter (1) comprises an LLC converter (C1, L2, L3).

7. Circuit according to one of claims 4 to 6, **characterised in that** the transistors (M1, M2, M3, M4) are embodied as MOS-FET or bipolar transistors, or as an IGBT.

8. Circuit according to one of claims 4 to 7, **characterised in that** the resonance converter (1) is embodied in the form of a full bridge or a half bridge.


**Revendications**

1. Procédé pour la régulation d'un convertisseur à résonance (1), lequel est connecté à un redresseur synchrone autopiloté (2) sur le côté secondaire par l'intermédiaire d'une isolation galvanique, en particulier par l'intermédiaire d'un transformateur (3), dans lequel le convertisseur à résonance (1) comprend au moins deux transistors (M1, M2) dont respectivement une fréquence de commutation est prédéfinie, **caractérisé en ce qu'**au moins un signal de commande (T1) des transistors (M1, M2) du convertisseur à résonance (1) et au moins un signal de commande (T2) de transistors (M3, M4) du redresseur synchrone autopiloté (2) sont lissés par au moins un filtre passe-bas discret (6) et les signaux de commande (T1, T2) lissés sont comparés l'un avec l'autre au moyen d'une soustraction par l'intermédiaire d'un soustracteur, en particulier d'un amplificateur différentiel, dans lequel une correction des fréquences de commutation des transistors (M1, M2) du convertisseur à résonance (1) se basant sur une différence déterminée s'effectue de telle sorte que la différence soit égale à zéro.

2. Procédé pour la régulation d'un convertisseur à résonance (1) selon la revendication 1, **caractérisé en ce que** lors de la correction des fréquences de commutation, les temps morts des transistors (M1, M2) du convertisseur à résonance (1) demeurent non modifiés et seuls les temps de mise en circuit sont modifiés.

3. Procédé pour la régulation d'un convertisseur à résonance (1) selon l'une des revendications 1 à 2, **caractérisé en ce que** les temps morts des transistors (M3, M4) du redresseur synchrone autopiloté (2) sont synchronisés avec les temps morts des transistors (M1, M2) du convertisseur à résonance (1).

4. Circuit pour la régulation d'un convertisseur à résonance (1) comprenant au moins deux transistors (M1, M2), comportant une isolation galvanique, en particulier un transformateur (3), et un redresseur synchrone autopiloté (2) disposé sur le côté secondaire avec des transistors (M3, M4), pour la mise en oeuvre du procédé selon l'une des revendications 1 à 3, **caractérisé en ce que** sont prévues des connexions par lesquelles au moins un signal de commande (T1) des transistors (M1, M2) du convertisseur à résonance (1) et au moins un signal de commande (T2) de transistors (M3, M4) du redresseur synchrone autopiloté (2) peuvent être injectés dans un filtre passe-bas discret (6) de sorte que les signaux de commande (T1, T2) des transistors puissent être lissés par le filtre passe-bas (6), **en ce qu'**est prévu un soustracteur (5) branché en aval du filtre passe-bas (6) par lequel les signaux de commande (T1, T2) lissés peuvent être comparés l'un avec l'autre au moyen d'une soustraction, et **en ce qu'**est prévue une unité de régulation (4) par laquelle une correction des fréquences de commutation des transistors (M1, M2) du convertisseur à résonance (1) se basant sur la différence déterminée peut s'effectuer de telle sorte que la différence soit égale à zéro.

**5.** Circuit selon la revendication 4, **caractérisé en ce que** l'unité de régulation (4) contient un oscillateur commandé en tension (10).

**6.** Circuit selon la revendication 4 ou la revendication 5, **caractérisé en ce que** le convertisseur à résonance (1) comporte un convertisseur LLC (C1, L2, L3).

**7.** Circuit selon l'une des revendications 4 à 6, **caractérisé en ce que** les transistors (M1, M2, M3, M4) sont conçus en tant que MOS-FET ou en tant que transistors bipolaires ou en tant qu'IGBT.

**8.** Circuit selon l'une des revendications 4 à 7, **caractérisé en ce que** le convertisseur à résonance (1) est conçu sous la forme d'un pont intégral ou d'un demi-pont.

FIG 1

EP 2 961 054 B1

FIG 2

SG1      SG2   T2

Sekundär

G1      G2

T1   Primär

FIG 3

SG1      SG2   T2

Sekundär

G1      G2

T1   Primär

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5375031 A

**In der Beschreibung aufgeführte Nicht-Patentliteratur**

- **WEIYI FENG ; MATTAVELLI, P. ; LEE, F.C. ; DIAN-BO FU.** LLC Converters with Automatic Resonant Frequency Tracking Based on Synchronous Rectifier (SR) Gate Driving Signals. *Applied Power Electronics Conference and Exposition (APEC),* 2011

- Pulsewidth Locked Loop (PWLL) for Automatic Resonant Frequency Tracking in LLC DC-DC Transformer (LLC -DCX). *IEEE-Veröffentlichung,* April 2013